# EUROPEAN PATENT SPECIFICATION

(11) **EP 2 901 532 B1**
(45) Date of publication and mention of the grant of the patent: **05.07.2017**
(21) Application number: 13766621.0
(22) Date of filing: 20.09.2013
(51) Int. Cl.: H02G 3/04

(54) **CABLE SUPPORT**
KABELTRÄGER
SUPPORT DE CÂBLE

(30) Priority: 25.09.2012 GB 201217065
(43) Date of publication of application: 05.08.2015
(73) Proprietor: British Telecommunications Public Limited Company, London EC1A 7AJ (GB)
(72) Inventor: NEALE, Stuart, Paterson, London EC1A 7AJ (GB)
(74) Representative: Cardus, Alan Peter
(86) International application number: PCT/GB2013/000398
(87) International publication number: WO 2014/049312

(56) References cited:
- DE-U1- 29 805 868
- GB-A- 470 637
- US-A- 3 697 667
- US-A1- 2009 189 026
- US-A1- 2012 111 598

## Description

### Field of the Invention

The invention relates to supports for cables, for example, for distribution frames in telephone switching centres.

### Introduction

In telephone switching centres, equipment within the switching centre is connected by cables in the so-called "local loop" to subscriber equipment located outside the switching centre. A main distribution frame (MDF) is used to hold telephone switching centre internal cabling (so-called "jumpers") which connect a port on the equipment (i.e. switch, repeater, DSLAM, etc) at one end of the jumper, to a termination of a cable running from the switching centre to the subscriber's premises, at the other end of the jumper.

Typically each jumper in the local loop comprises a copper cable. The MDF provides flexibility in setting up, tearing down and re-routing connections assigned to a local loop. Typically, a MDF comprises a long steel rack accessible from both sides. One side holds termination blocks arranged in a series of horizontal rows. Along the rows run horizontal jumper beds: a form of cable run. Jumpers are routed along the beds. Some jumpers may be routed out of a bed to run vertically to reach a termination block located on a different level, with vertical runs typically arranged on the opposite side of the MDF from the horizontal jumper beds. US2009/189026 (Bourgeois) describes a cable support mechanism comprising a U-shaped body member with a support bar introduced between two sides of the body member to support newly added cables. Thus the cable support mechanism is capable of supporting a plurality of cables divided into subsets with one subset supported by part of the U-shaped body member and a second, newly-added subset supported by the support bar.

When a connection is no longer needed, the corresponding jumper may be recovered (removed from the beds) to make space for new jumpers and to allow re-cycling of copper wire. Recovery is conventionally achieved by pulling longitudinally on a jumper, e.g. on one end of the jumper.

Inevitably, some jumper beds become overcrowded. Overcrowding, and in particular, excessive depth of jumpers in a bed, makes it difficult or impossible to recover redundant jumpers. The problem is caused by pressure exerted on jumpers by other jumpers in the bed, making recovery difficult. More importantly, due to unrecovered jumpers, some switching centres do not have room to add new jumpers. If a jumper cannot be added, new services, new customers and service changes cannot be supported by that switching centre. Eventually the switching centre has to close or a new MDF installed at great cost.

### Statement of Invention

A cable support for supporting a subset of a plurality of cables in a substantially enclosed cable run is proposed, in which the plurality of cables comprises a first subset and a second subset. The cable support is arranged between first and second side arms of the substantially enclosed cable run and above a cable-support base portion of the substantially enclosed cable run and arranged to extend, in use, between the first subset and the second subset of the plurality of cables and to provide, in use, support to the first subset of cables. The first subset of the plurality of cables are located, in use, above the second cable support and the second subset of the plurality of cables are located, in use, below the second cable support. The second cable support is mounted to a support structure so that the second cable support transfers, in use, the weight of the first subset of cables to the support structure.

The cable support allows the quantity of cables supported by the cable-support base portion of the cable run to be reduced, when compared to a conventional cable run, so facilitating the removal of redundant cables from the cable run. In particular, by reducing the weight of cables supported in whole or in part by cables lower down in the cable run, the friction between cables is reduced, so reducing the force required to remove a cable from the cable run by pulling on one end of the cable.

According to an aspect of the invention, the cables of the second subset are removable by pulling longitudinally on the cable wherein removal of a cable is subject to overcoming friction between the cable to be removed and at least one other cable of the second subset. The friction between the cable to be removed and the at least one other cable is increased by the weight of cables partially or wholly supported by the cable to be removed. Transferring the weight of the first subset of the plurality of cables via the second cable support to the support structure reduces the weight of cables partially or wholly supported by the cable to be removed, so as to facilitate removal of the cable to be removed. Also proposed is a cable distribution frame, such as an MDF, comprising the cable support arrangement of the present invention.

In brief, the cable support is fitted as follows. a gap is opened up in the plurality of cables to separate a first subset located above the gap from a second subset located below the gap. The cable support is introduced into the gap between the first subset and second subset and mounted to a support structure. The first subset is lowered onto the second cable support, so that the weight of the first subset is transferred via the second cable support to the support structure.

In more detail, in a plurality of cables supported by a first cable support, opening up a gap between a first subset of the plurality of cables located above the gap and a second subset of the plurality of cables located below the gap, in which the second subset of the plurality of cables located below the gap are located on and supported by the first cable support after opening up of the gap; in which the first subset of the plurality of cables located above the gap are separated by the gap from the second subset of the plurality of cables located below the gap; the method comprising:
introducing a second cable support into the gap and positioning the second cable support between the first subset and the second subset of the plurality of cables;
mounting the second cable support in a position between the first subset and the second subset of the plurality of cables to a support structure; and
lowering onto the second cable support, the first subset of the plurality of cables so that the weight of the first subset of the plurality of cables is transferred via the second cable support to the support structure.

The second cable support allows the quantity of cables supported by the first cable support to be reduced, when compared to a conventional cable run, so facilitating the removal of redundant cables from the cable run

A cable support arrangement for supporting a plurality of cables comprising a first subset and a second subset of cables in a substantially enclosed cable run is proposed. The cable run comprises a cable-support portion for supporting the second subset and first and second side arms that project above the cable-support portion. The cable support arrangement also comprises a second cable support arranged between the first and second side arms and extending between the first and second subsets to provide support to the first subset of cables. The second cable support is mounted to a support structure so that the second cable support transfers the weight of the first subset to the support structure.

### Brief Description of the Drawings

In order to aid understanding, embodiments of the invention will now be described by way of example with reference to the drawings in which:
Figures 1a and 1b show a view of a conventional MDF shelf;
Figures 2a-2c show a view of an MDF shelf and exemplary cable support illustrating aspects of the present invention;
Figures 3a-3d shows schematically, operation of a separator tool according to further aspects of the invention.

### Detailed Description of Embodiments

The present invention provides for the introduction of one or more extra cable supports (or "needle bars") between jumpers running inside a jumper bed so as to separate the jumpers by introducing gaps between jumpers above the extra supports and jumpers below. This effectively converts a single jumper bed into a plurality of vertically-separated beds with a reduced quantity of jumpers per bed. Advantageously, according to an embodiment, this is achieved without needing to remove jumpers from the MDF shelf. The weight of jumpers resting on the extra cable support is transferred to the MDF frame (or some other form of support structure), thus reducing the pressure exerted by other jumpers on jumpers below the extra cable support.

According to an embodiment, to facilitate insertion of a support into an existing mass of jumpers in a bed, a gap is opened up between the jumpers in the bed by manipulation of an oval cross-section "spear-like" tool urged into the mass of jumpers and rotated to create a gap for insertion of the support. The introduction of cable supports facilitates recovery of redundant jumpers, which may in turn provide sufficient space to allow some supports to be removed and others lowered to provide space for new jumpers to be added. Embodiments of the present invention provide for appropriate adjustment to the position of cable supports.

The invention provides an efficient and cost-saving alternative solution when compared with previously used techniques for coping with congested jumper beds, which include emptying an entire jumper bed by removal of every jumper, extracting redundant jumpers and then returning the remaining, used jumpers to the bed or simply increasing capacity by installing an additional MDF.

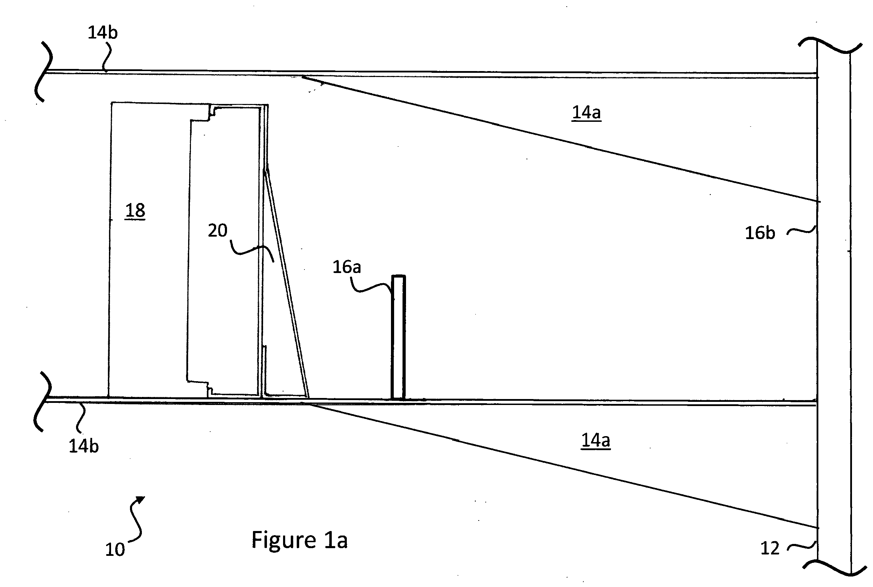

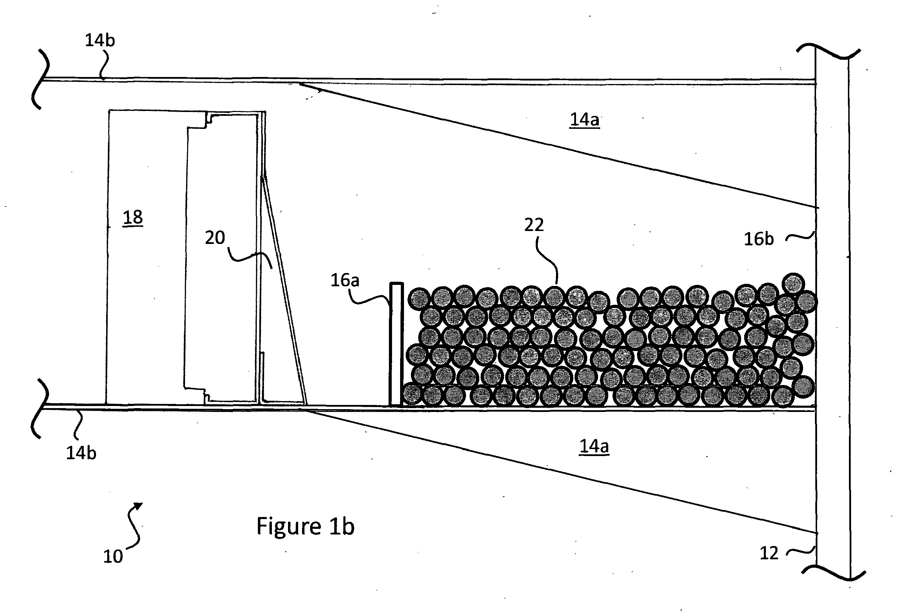

A conventional MDF shelf will now be described with reference to Figures 1a and 1b. In Figure 1a, 10 shows, in side view, a partial view of a typical MDF shelf area including a jumper bed. The jumper bed is effectively formed by rear support member 12, shelf support bracket 14a, 14b and forward jumper ring 16a for guiding jumpers entering or leaving the jumper bed. Typically, rear support member 12 may comprise a further, rear jumper ring (not shown but indicated at 16b). In the embodiment illustrated in Figure 1a, the jumper bed takes the form of a substantially U-shaped cable run in which rear support member 12 together with rear jumper ring 16b and forward jumper ring 16a represent side arms which act to retain the jumpers within, and to guide the jumpers along, the jumper bed. Upper shelf support bracket 14a, 14b form a top member which substantially enclose the cable run so as to prevent introduction of cable into the run from above. The only route for introduction of cables into the substantially enclosed cable run comprises the gap between the top of forward jumper ring 16a and the lower surface of upper shelf support bracket 14a, 14b. The MDF shelf typically may also comprise connector block 18 for the termination of jumpers and fanning strip 20: a plate fixed behind connector block 18 for feeding jumper wires to connection terminals of connector block 18. Both connector block 18 and fanning strip 20 sit on, and are supported by, shelf support bracket 14b.

Figure 1b shows a similar view to Figure 1a but with a schematic representation (not to scale) of a plurality of jumpers 22 running along the MDF jumper bed, i.e. running away from the viewer. It will be apparent from Figure 1b that forward jumper ring 16a and rear support member 12 with rear jumper ring 16b, as appropriate, project above shelf support bracket 14a, 14b and act to retain jumpers 22 over shelf support bracket 14a, 14b.

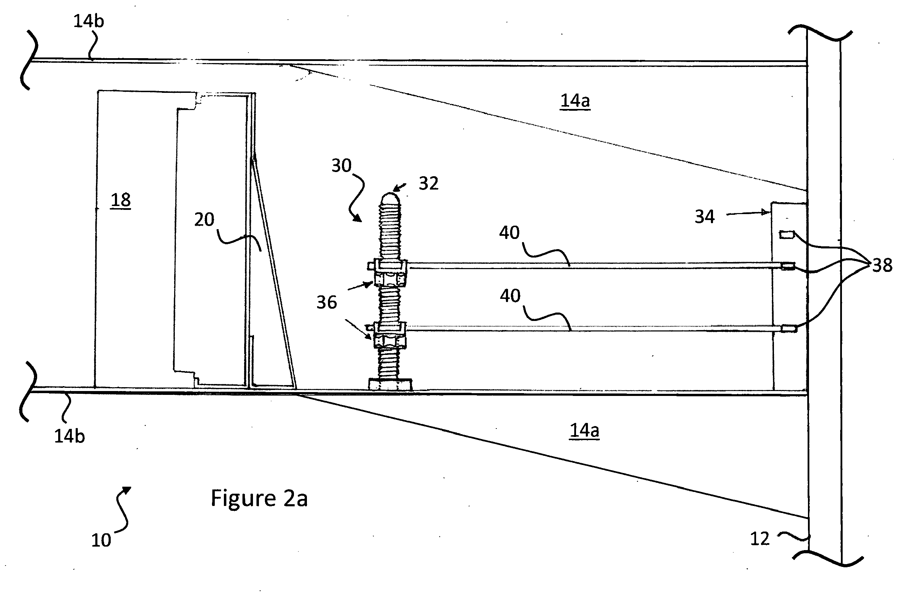

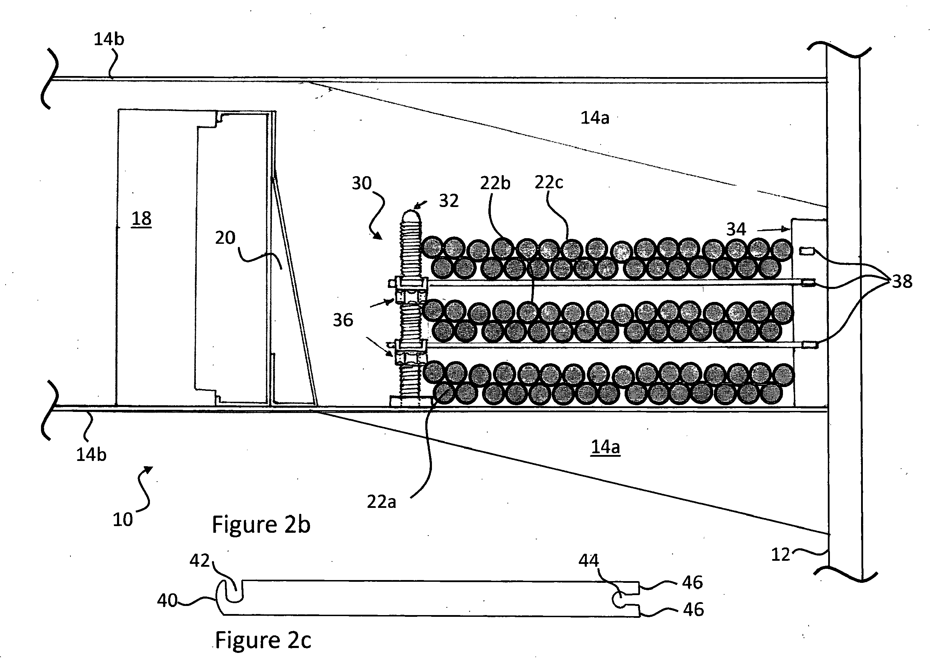

An MDF shelf illustrating aspects of the present invention will now be described with reference to Figures 2a and 2b. In Figure 2a, 10 shows, in side view, a partial view of a typical MDF shelf area modified according to an exemplary embodiment of the present invention. In Figures 2a and 2b components common with Figures 1a and 1b bear the same reference numerals and will not be further discussed. Figure 2a, shows forward support 30, rear support 34, and rigid cable supports 40 mounted therebetween. Forward jumper ring 16a is still present but is hidden in Figure 2a behind forward support 30. Rear jumper ring 16b is still present but is hidden. Two types of support are shown in Figure 2a: jack support and slotted support. In the cable run of Figure 2a, the only route for introduction of cables into the substantially enclosed cable run comprises the gap between the top of forward support 30 and the lower surface of upper shelf support bracket 14a, 14b.

### Jack Support

Front support 30 comprises a threaded shaft 32 upon which cooperatively-threaded support fixing components 36 can be applied - each fixing component 36 providing support for one end of a cable support 40. This design of support will be referred to a "jack support". Advantageously, the position of fixing components 36 can be adjusted by rotating the fixing component, causing the fixing component 36 to move along the threaded shaft 32. Due to this adjustable geometry, the position of cable support 40 can be finely adjusted to reflect different fill levels of jumpers in the jumper bed. According to an alternative embodiment, both forward and rear supports may follow the jack support design.

### Slotted Support

In Figure 2a, rear support 34 is of the slotted design. Rear support 34 comprises a length of rigid material comprising one or more slots 38, each slot or pair of slots 38 suitable for accommodating one end of a cable support 40. According to an embodiment, slotted support 34 comprises a length of angled metal strip, such as aluminium, in which slots are formed at or near the apex of the angled strip. The slotted design provides a simpler and cheaper alternative to the jack design, although the adjustment available is not as fine. According to an alternative embodiment, both forward and rear supports may follow the slotted support design

Figure 2b shows a similar view to Figure 2a but with a schematic representation (not to scale) of a plurality of sub-sets 22a, 22b, 22c of jumpers, i.e. plurality of jumpers 22 is now separated into three subsets 22a, 22b, 22c. It will be clear from a comparison of Figures 1b and 2b that the introduction of cable supports 40, significantly reduces the quantity and depth of jumpers stacked on each support. This results in it being much easier to remove redundant jumpers by pulling the jumper out of the jumper bed from one end.

Figure 2c shows, by way of example, a plan view of cable support 40 according to an embodiment of the invention. Cable support 40 may be manufactured from sheet material, e.g. steel or aluminium cut to shape or moulded plastic material. Lateral slot 42 is formed adjacent the forward end of cable support 40 (i.e. the end designed to mate with forward support 30) and longitudinal slot 44, flanked by pair of tabs 46, is formed adjacent the rearward end of cable support 40 (i.e. the end designed to mate with rear support 34). Cable support 40 is designed for mounting to various designs of support structure. In the example of the cable support shown in Figure 2c, lateral slot 42 is suitable for mating with a forward jack support, i.e. by accommodating threaded shaft 32. Longitudinal slot 44 is suitable for mating with a rear jack support, i.e. by accommodating threaded shaft 32, while tabs 46 are suitable for mating with a pair of slots of a rear slotted support.

Advantageously, cable supports 40 may be retrofitted, as will be described next, into a jumper bed that is already carrying jumpers (including a jumper bed that is already congested to the point that it is impractical to remove redundant jumpers) by introducing one or more cable support 40 between jumpers located in the jumper bed. The retrofitting of cable supports 40 advantageously allows congested jumper beds to be decongested by reducing the depth of jumpers on each cable support and facilitating the removal of redundant jumpers. This provides an efficient and cost-saving alternative solution when compared with previously used techniques for coping with congested jumper beds, which include emptying an entire jumper bed, extracting redundant jumpers and then returning the remaining, used jumpers to the bed or simply increasing capacity by installing an additional MDF.

According to one aspect of the invention, a separator tool is used to separate into two parts the mass of jumpers running in a jumper bed. For example an elongate tool having an oval cross-section (or similar cross section with unequal cross-sectional axes) and a tapered tip may be introduced into a set of jumpers to separate the jumpers and form a gap therebetween. The easiest way to do this may be to urge the separator tool into the jumper bed from the front of the MDF so that the longer axis of the ellipse is roughly aligned with the longitudinal axis of the majority of jumpers. Once the separator tool is fully inserted into the jumper bed, or even positioned to protrude from the rear of the jumper bed, the tool may be rotated so as to increase the gap between the separated jumpers by roughly aligning the longer axis of the ellipse perpendicular to the longitudinal axis of the majority of jumpers. Alternatively, the tool may simply be lifted so as to open up a gap. Once the cable support has been put in place, the tool may either be lowered or simply removed.

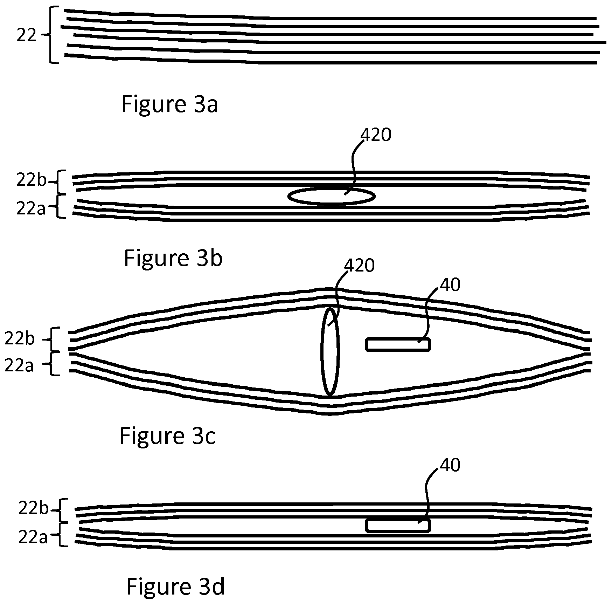

Figures 3a-3d illustrate use of such a separator tool. Figure 3a shows jumpers 22 from Figure 1b but now shown from a side view, e.g. looking from the front of MDF 10. Jumpers 22 are located in the jumper bed, as before, although the jumper bed is not shown in Figures 3a-3d to improve clarity. Jumpers 22 form a closely stacked set. Figure 3b shows in cross-section, separator tool 420 inserted between two sub-sets of jumpers corresponding to sub-sets 22a and 22b of Figure 2b (i.e. mass of jumpers 22 is now separated into sub-sets 22a and 22b). In Figure 3b, separator tool 420 has been inserted into the jumper bed between jumper sub-sets 22a and 22b so that the longer axis of the ellipse is roughly aligned with the longitudinal axis of the jumpers. This results in a narrow gap being opened up between jumper sub-sets 22a and 22b. Figure 3c, shows separator tool 420 has been rotated so as to increase the gap between the separated jumper sub-sets 22a and 22b by roughly aligning the longer axis of the ellipse perpendicular to the longitudinal axis of the jumpers. The wider gap of Figure 3c is sufficiently wide to allow introduction of a cable support 40 (shown end-on). Figure 3d, shows separator tool 420 has been removed and cable support 40 fitted in position so as to support jumper sub-set 22b. The weight of jumpers applied to any jumper of sub-set 22a is now reduced compared with the situation shown in Figure 3a.

In practice a series of cable supports may be introduced at intervals along a jumper bed so as to ensure separation of the jumper sub-sets along the whole MDF, thereby maximising the benefit derived from the invention.

Although shown as single piece, threaded shaft 32, may comprise a plurality of threaded shaft parts (not shown) designed to fit together longitudinally, so as to form longer threaded shaft 32. For example, a first threaded shaft part may comprise a threaded boss extending from one end of the shaft. A second threaded shaft part may be provided with a corresponding threaded recess located at an end of the shaft so as to accept the threaded boss of another threaded shaft part. Insertion and rotation of the threaded boss in the corresponding threaded recess would securely fix the two threaded shaft parts together to resemble a single threaded shaft. Advantageously, threaded shaft 32 may be elongated when fitted in position in the MDF shelf.

Use of threaded shaft parts advantageously allows the number of jumpers to be safely increased at a later date by extending an existing installation of cable supports. By adding an additional length of threaded shaft at a later date, a further cable support may be added above the existing jumpers in a jumper bed and, thereby, provide capacity for adding further jumpers without resulting in an undesirably tight stacking of cable supports.

Fitting of a cable support will now be described in detail, by way of example. According to an embodiment, cable support 40 may be fitted to the MDF according to the following procedure:
Fit rear slotted support 34 to rear support member 12 (e.g. using a tie-wrap or alternative, suitable type of fastener through top slot 38);
Fit front jack support 30 by screwing into a threaded boss (not shown) provided on a suitable part of the MDF frame, e.g. shelf support bracket 14b, or a rail running between adjacent shelf support brackets 14b. Position support fixing nut 36 so that the top of the nut is at the desired height for the cable support (typically 50 to 100 mm from shelf support bracket 14b);
Insert the jumper separator tool into the mass of jumpers running in the jumper bed at or slightly below the desired height of the cable support 40, ensuring separator tool major axis is kept roughly aligned with the longitudinal axis of the jumpers;
Rotate separator tool a quarter turn to separate the mass of jumpers and lift those jumpers located above the tool so as to open up a gap. If any jumpers have been split by the separator tool, the tool may be removed and the last two steps repeated;
Insert a cable support 40 into the gap in the jumper bed, so that one end of cable support 40 engages with slot 38 at the appropriate position in rear support 34 and the other end of cable support 40 engages with forward jack support 30 and; optionally, also with adjacent jumper ring 16a (for this purpose, cable support 40 may be provided with a lateral slot near one end to engage with jack support 30); Optionally, a locking tab washer may be positioned over support fixing nut 36 with a tab facing up (this acts to lock cable support 40 in place once the weight of jumpers is applied to cable support 40);
Rotate the separator tool a quarter turn to lower the jumpers above the newly inserted cable support 40 and remove the tool from the mass of jumpers.

If required, the above procedure may be repeated at a different distance from shelf support bracket 14b in order to introduce a further, e.g. second or third cable support 40 so as to further divide up the mass of jumpers to create one or more further sub-sets. As indicated, above, forward support 30 and rear support 34 may comprise a plurality of threaded shaft parts designed to fit together longitudinally, so as to form a longer threaded shaft 32. Where one or more further cable support 40 is required, it may therefore be necessary to fit an extra threaded shaft part to the top of the fitted threaded shaft 32 in order to elongate it sufficiently to carry a further cable support in the desired position. Once the further cable support 40 is introduced and mounted to a support structure (e.g. forward support 30 and rear support 34), the jumpers of the further subset immediately above the further cable support are allowed to rest on further cable support 40, which cable support transfers their weight to the support structure, so relieving jumpers located below further cable support 40 from bearing the weight of the jumpers of the further sub-set. According to an embodiment four cable supports may be fitted in a stack in a jumper bed to divide the mass of jumpers into four sub-sets. To protect from earth contact faults, both forward and rear supports 30, 34 may, according to an embodiment, be electrically insulated from the frame of MDF 10 (and thereby from earth) by use of insulating tape and plastic jumper rings 16. Alternatively, cable supports 40 may be produced with an electrically insulating surface.

Advantageously, the invention also allows a jumper bed to be easily re-configured to reflect a reduced quantity of jumpers, e.g. as a result of the removal of redundant jumpers. When sufficient jumpers have been removed adjacent to a cable support, it may be permissible to adjust the position of one or more cable supports so as to move into the space created by the removal of jumpers or to simply to remove a support, so as to allow jumpers previously supported by the cable support to move into the space created by removal of jumpers.

Adjustment may be effected by rotating fixing component 36 so as to progress along threaded support 32. In an alternative embodiment where slotted support 34 is used, similar adjust may be effected by moving a cable support to a different slot 38. The movement of a cable support may be facilitated by reinserting the separator tool to remove the weight of jumpers from the cable support which is to be moved. The cable support may then be removed to allow jumpers to be repositioned and then refitted, for example, following appropriate steps in the fitting of a cable support procedure, described above.

According to a further embodiment of the invention, threaded shaft parts have no thread in a region adjacent to a fixing for another threaded shaft part. For example, a threaded shaft part may have no thread adjacent either an end bearing the threaded boss or an end bearing the threaded recess or both. Advantageously, this embodiment facilitates transferring fixing component 36 from one threaded shaft part to an adjacent threaded shaft part. When fitting one threaded shaft part to another, it would be problematic to ensure that the threads on each were sufficiently well aligned to allow fixing component 36 to transfer. By having no thread adjacent to a fixing for another threaded shaft part, fixing component 36 is able to free itself from the thread on one threaded shaft part, before engaging with the thread on the next threaded shaft part.

According to an alternative embodiment, instead of using a separator tool, a gap may be produced between different sub-sets of jumpers by lifting jumpers by hand from the open aspect (e.g. the top) of a jumper bed. The invention is not limited to the types of support shown in Figure 2a (i.e. jack support and slotted support) but may be implemented with other suitable designs providing support to a cable support at an appropriate position in the jumper bed.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

Typically, each jumper comprises a single copper wire, although the invention applies equally to jumpers or other forms of cable with two or more conductors of copper or another suitable material. The invention also has application to coaxial cables and optical, e.g. glass fibre, cables. The invention is not limited to use in MDFs in telephone switching centres or to the local loop but may be of benefit in similar applications that can result in similarly congested cable runs.

## Claims

1. A method of supporting cables in a cable support arrangement in which the cable support arrangement comprises a substantially enclosed cable run, in which the method is **characterised by** :
in a plurality of cables (22) located in the substantially enclosed cable run and supported by a first cable support (14b), without removing the plurality of cables from the substantially enclosed cable run, opening up a gap between a first subset (22b) of the plurality of cables located above the gap and a second subset (22a) of the plurality of cables located below the gap, in which the second subset of the plurality of cables located below the gap are located on and supported by the first cable support after opening up of the gap;
in which the first subset of the plurality of cables located above the gap are separated by the gap from the second subset of the plurality of cables located below the gap; the method comprising, without removing any of the plurality of cables from the substantially enclosed cable run:
introducing a second cable support (40) into the gap and positioning the second cable support between the first subset and the second subset of the plurality of cables;
mounting the second cable support in a position between the first subset and the second subset of the plurality of cables to a support structure (30, 34); and
lowering onto the second cable support, the first subset of the plurality of cables so that the weight of the first subset of the plurality of cables is transferred via the second cable support to the support structure.

2. The method of claim 1 comprising, following removal of one or more of the cables of the second subset below the second cable support so as to create a space into which the second cable support may be lowered, lowering the second cable support together with the cables supported by the second cable support.

3. The method of any of claims 1 or 2, in which the second cable support (40) is mounted to a support structure (30) having an adjustable geometry, in which the geometry of the support structure is adjustable to raise or lower the second cable support together with the cables supported by the second cable support.

4. The method of claim 3 comprising adjusting the geometry of the support structure to lower the second cable support together with the cables supported by the second cable support.

5. The method of any above claim, in which the cables of the second subset (22a) are removable from the second subset by pulling longitudinally on the cable;
in which removal of a cable of the second subset is subject to overcoming friction between the cable to be removed and at least one other cable of the second subset;
in which the friction between the cable of the second subset to be removed and the at least one other cable of the second subset is increased by the weight of cables partially or wholly supported by the cable to be removed;
in which transferring the weight of the first subset (22b) of the plurality of cables via the second cable support to the support structure reduces the weight of cables partially or wholly supported by the cable to be removed, so as to facilitate removal of the cable to be removed.

6. The method of any above claim, in which the first cable support (14b) forms part of a cable run comprising first and second side arms (30, 34); in which the first and second side arms are located adjacent either end of the first cable support to project above the first cable support.

7. The method of any above claim, in which the first cable support (14b) forms part of a cable run comprising first and second side arms (30, 34); in which the first and second side arms are arranged to retain the cables over the first cable support.

8. The method of any above claim, in which the first cable support (14b) forms part of a cable run comprising first and second side arms (30, 34); in which the first and second side arms are arranged to guide the cables along the cable run.

9. The method of any of claims 6, 7 and 8, comprising mounting the second cable support in the cable run in a position between the first and second side arms.

10. The method of any above claim, in which the cable run has an open upper aspect allowing cables to be added to the plurality of cables by lowering the cables on top of existing cables located in the cable run.

11. The method of any above claim further comprising introducing a cable separator tool (420) between cables of the plurality of cables supported by the first cable support (14b);
manipulating the tool so as to open up the gap between the first subset of the plurality of cables located above the tool and the second subset of the plurality of cables located below the tool.

12. The method of claim 11 further comprising, following mounting of the second cable support (40), displacing the tool so that the first subset of the plurality of cables is lowered onto the second cable support and the weight of the first subset is transferred to the support structure.

13. The method of any above claim further comprising introducing a further cable support (40) into a further gap opened between the cables of the plurality of cables so as to separate the cables to form a further subset (22c) of the plurality of cables so that the further cable support supports the cables of the further subset and transfers the weight of the further subset of cables to the support structure.

14. A cable support arrangement for supporting a plurality of cables (22) in a substantially enclosed cable run, in which the plurality of cables comprises a first subset (22b) and a second subset (22a):
in which the cable support arrangement comprises a substantially enclosed cable run comprising: first and second side arms (30, 34) of the substantially enclosed cable run arranged to project above a cable-support base portion (14b) of the substantially enclosed cable run and in which the cable support arrangement also comprises: a second cable support (40) arranged in the substantially enclosed cable run between the first and second side arms and arranged to extend, in use, between the first subset and the second subset of the plurality of cables and to provide, in use, support to the first subset of cables;
in which the first subset of the plurality of cables are located, in use, above the second cable support and the second subset of the plurality of cables are located, in use, below the second cable support;
in which the second cable support is mounted to a support structure so that the second cable support transfers, in use, the weight of the first subset of cables to the support structure
**characterised in that**:
the second cable support is arranged to extend, in use, in the substantially enclosed cable run between the first subset and a second subset of cables in a position that would be occupied by the first subset of cables, were the second cable support to be removed from the substantially enclosed cable run;
such that, without removing any of the plurality of cables from the substantially enclosed cable run, the second cable support can be introduced, in use, from outside of the substantially enclosed cable run into a gap between the first subset and the second subset of the plurality of cables.

15. A cable support arrangement as claimed in claim 14 further comprising:
a top cover portion (14b) arranged to extend over the plurality of cables and to prevent introduction of cables into the cable run from above;
in which one of the first and second side arms (30, 34) provides a gap for introducing from one side cables into the cable run between the side arm and the top cover portion.

16. The cable support arrangement of claim 14 in which the first and second side arms (30, 34) of the substantially enclosed cable run are arranged in use to retain the plurality of cables over the cable-support portion of the substantially enclosed cable run.

17. The cable support arrangement of claim 14 in which the first and second side arms (30, 34) of the substantially enclosed cable run are arranged in use to guide the cables along the substantially enclosed cable run.

18. The cable support arrangement of any of claims 14 to 17 in which the second cable support is substantially straight.

19. The cable support arrangement of any of claims 14 and 18 comprising a plurality of second cable supports (40), in which the first subset of cables comprises a plurality of groups of cables;
in which each second cable support is arranged, in use, between the first and second side arms of the substantially enclosed cable run to extend, in use, above the second subset of the plurality of cables and to provide, in use, support to a different one of the groups of cables of the first subset of cables.

20. A cable distribution frame (10) comprising one of the cable support arrangement of any of claims 14 to 19.

## Patentansprüche

1. Verfahren zum Halten von Kabeln in einer Kabelhalteanordnung, wobei die Kabelhalteanordnung eine im Wesentlichen eingeschlossene Kabeltrasse umfasst, wobei das Verfahren **gekennzeichnet ist durch**:
unter mehreren Kabeln (22) in der im Wesentlichen eingeschlossenen Kabeltrasse, die **durch** eine erste Kabelhalterung (14b) gehalten ist, ohne Entfernen der mehreren Kabel von der im Wesentlichen eingeschlossenen Kabeltrasse, Öffnen eines Spalts zwischen einem ersten Untersatz (22b) der mehreren Kabel über dem Spalt und einem zweiten Untersatz (22a) der mehreren Kabel unter dem Spalt, wobei der zweite Untersatz der mehreren Kabel unterhalb des Spalts auf der ersten Kabelhalterung angeordnet sind und von ihr gehalten werden, nachdem der Spalt geöffnet wurde;
wobei der erste Untersatz der mehreren Kabel über dem Spalt **durch** den Spalt vom zweiten Untersatz der mehreren Kabel unter dem Spalt getrennt ist, wobei das Verfahren aufweist, ohne eines der mehreren Kabel aus der im Wesentlichen eingeschlossenen Kabeltrasse zu entfernen:
Einführen einer zweiten Kabelhalterung (40) in den Spalt und Positionieren der zweiten Kabelhalterung zwischen dem ersten Untersatz und dem zweiten Untersatz der mehreren Kabel;
Anbringen der zweiten Kabelhalterung in einer Position zwischen dem ersten Untersatz und dem zweiten Untersatz der mehreren Kabel an einer Haltestruktur (30, 34); und
Absenken des ersten Untersatzes der mehreren Kabel auf die zweite Kabelhalterung, so dass das Gewicht des ersten Untersatzes der mehreren Kabel mittels der zweiten Kabelhalterung an die Haltestruktur übertragen wird.

2. Verfahren nach Anspruch 1, mit, auf das Entfernen eines oder mehrerer Kabel des zweiten Untersatzes unter der zweiten Kabelhalterung hin, um einen Raum zu erzeugen, in den die zweite Kabelhalterung abgesenkt werden kann, Absenken der zweiten Kabelhalterung zusammen mit den von der zweiten Kabelhalterung gehaltenen Kabeln.

3. Verfahren nach Anspruch 1 oder 2, bei dem die zweite Kabelhalterung (40) an eine Haltestruktur (30) mit einstellbarer Geometrie angebracht ist, wobei die Geometrie der Haltestruktur einstellbar ist, um die zweite Kabelhalterung zusammen mit den von der zweiten Kabelhalterung gehaltenen Kabeln anzuheben und abzusenken.

4. Verfahren nach Anspruch 3, mit dem Anpassen der Geometrie der Haltestruktur, um die zweite Kabelhalterung zusammen mit den von der zweiten Kabelhalterung gehaltenen Kabeln abzusenken.

5. Verfahren nach einem der obigen Ansprüche, bei dem die Kabel des zweiten Untersatzes (22a) durch Ziehen an den Kabeln in Längsrichtung vom zweiten Untersatz entfernbar sind;
wobei das Entfernen eines Kabels des zweiten Untersatzes dem Überwinden der Reibung zwischen dem zu entfernenden Kabel und zumindest einem weiteren Kabel des zweiten Untersatzes unterliegt;
wobei die Reibung zwischen dem zu entfernenden Kabel des zweiten Untersatzes und dem zumindest einen anderen Kabel des zweiten Untersatzes durch das Gewicht der Kabel, die teilweise oder ganz von dem zu entfernenden Kabel gehalten werden, erhöht wird;
wobei das Übertragen des Gewichts des ersten Untersatzes (22b) der mehreren Kabel über die zweite Kabelhalterung an die Haltestruktur das Gewicht der Kabel reduziert, die ganz oder teilweise von dem zu entfernenden Kabel gehalten werden, so dass das Entfernen des zu entfernenden Kabels vereinfacht wird.

6. Verfahren nach einem der obigen Ansprüche, bei dem die erste Kabelhalterung (14b) Teil einer Kabeltrasse bildet, die erste und zweite Seitenarme (30, 34) hat; wobei die ersten und zweiten Seitenarme neben den Enden der ersten Kabelhalterung angeordnet sind, um über die erste Kabelhalterung hinauszuragen.

7. Verfahren nach einem der vorherigen Ansprüche, bei dem die erste Kabelhalterung (14b) Teil einer Kabeltrasse bildet, und erste und zweite Seitenarme (30, 34) aufweist; wobei die ersten und zweiten Seitenarme angeordnet sind, die Kabel über der ersten Kabelhalterung zu halten.

8. Verfahren nach einem der vorherigen Ansprüche, bei dem die erste Kabelhalterung (14b) Teil einer Kabeltrasse bildet, und erste und zweite Seitenarme (30, 34) aufweist; wobei die ersten und zweiten Seitenarme angeordnet sind, um die Kabel längs der Kabeltrasse zu führen.

9. Verfahren nach einem der Ansprüche 6, 7 oder 8, mit dem Anbringen der zweiten Kabelhalterung in der Kabeltrasse an einer Position zwischen dem ersten und dem zweiten Seitenarm.

10. Verfahren nach einem der vorherigen Ansprüche, bei dem die Kabeltrasse eine offene obere Ansicht hat, die es ermöglicht, Kabel, die den mehreren Kabeln zuzuführen sind, oben auf existierende Kabel der Kabeltrasse abzusenken.

11. Verfahren nach einem der vorherigen Ansprüche, mit dem Einführen eines Kabeltrennwerkzeugs (420) zwischen Kabel der mehreren Kabel, die von der ersten Kabelhalterung (40b) gehalten werden;
Betätigen des Werkzeugs so, dass der Spalt zwischen dem ersten Untersatz und der mehreren Kabel über dem Werkzeug und dem zweiten Untersatz der mehreren Kabel unter dem Werkzeug geöffnet wird.

12. Verfahren nach Anspruch 11, mit, auf das Anbringen der zweiten Kabelhalterun (40) hin, Verschieben des Werkzeugs, so dass der zweite Untersatz der mehreren Kabel auf die zweite Kabelhalterung abgesenkt wird und das Gewicht des ersten Untersatzes auf die Haltestruktur übertragen wird.

13. Verfahren nach einem der früheren Ansprüche, mit Einführen einer weiteren Kabelhalterung (40) in einen weiteren Spalt, der zwischen den Kabeln der mehreren Kabel, um die Kabel zur Bildung eines weiteren Untersatzes (22c) der mehreren Kabel zu trennen, so dass die weitere Kabelhalterung des Kabel des weiteren Untersatzes hält und das Gewicht des weiteren Untersatzes der Kabel auf die Haltestruktur überträgt.

14. Kabelhalteanordnung zum Halten mehrerer Kabel (22) in einer im Wesentlichen eingeschlossenen Kabeltrasse, wobei die mehreren Kabel einen ersten Untersatz (22b) und einen zweiten Untersatz (22a) aufweisen:
wobei die Kabelhalteanordnung eine im Wesentlichen eingeschlossene Kabeltrasse umfasst mit:
ersten und zweiten Seitenarme (30, 34) der im Wesentlichen eingeschlossenen Kabeltrasse, die angeordnet sind, um über einen Kabelhaltebasisbereich (14b) der im Wesentlichen eingeschlossenen Kabeltrasse zu ragen und wobei die Kabelhalteanordnung außerdem aufweist:
eine zweite Kabelhalterung (40),die in der im Wesentlichen eingeschlossenen Kabeltrasse zwischen dem ersten und dem zweiten Arm angeordnet ist, und so angeordnet ist, dass sie in Verwendung zwischen dem ersten Untersatz und dem zweiten Untersatz der mehreren Kabel liegt und in Verwendung Halterung für den ersten Untersatz der Kabel liefert;
wobei der erste Untersatz der mehreren Kabel in Verwendung über der zweiten Kabelhalterung angeordnet ist und der zweite Untersatz der mehreren Kabel in Verwendung unter der zweiten Kabelhalterung angeordnet ist;
wobei die zweite Kabelhalterung einer Kabelhaltestruktur angebracht ist, so dass die zweite Kabelhalterung in Einsatz das Gewicht des ersten Untersatzes der Kabel an die Haltestruktur zu übertragen,
**dadurch gekennzeichnet, dass**:
die zweite Kabelhalterung im Einsatz so angeordnet ist, dass sie sich in der im Wesentlichen eingeschlossenen Kabeltrasse zwischen dem ersten Untersatz und dem zweiten Untersatz der Kabel in einer Position erstreckt, die vom ersten Untersatz der Kabel eingenommen wäre, während die zweite Kabelhalterung von der im Wesentlichen eingeschlossenen Kabeltrasse zu entfernen;
so dass ohne Entfernen eines der mehreren Kabel aus der im Wesentlichen eingeschlossenen Kabeltrasse die zweite Kabelhalterung in Verwendung von der Außenseite der im Wesentlichen eingeschlossenen Kabeltrasse in einen Spalt zwischen dem ersten Untersatz und dem zweiten Untersatz der mehreren Kabel eingeführt werden kann.

15. Kabelhalteanordnung nach Anspruch 14, mit:
einem oberen Abdeckbereich (14b), der so angeordnet ist, dass er sich über die mehreren Kabel erstreckt und das Einführen von Kabel in die Kabeltrasse von oben verhindert;
wobei einer des ersten und des zweiten Seitenarms (30, 34) einen Spalt zum Einführen eines Kabels von einer Seite in die Kabeltrasse zwischen den Seitenarmen und dem oberen Abdeckbereich aufweist.

16. Kabelhalteanordnung nach Anspruch 14, bei der der erste und der zweite Seitenarm (30, 34) der im Wesentlichen eingeschlossenen Kabeltrasse in Verwendung so angeordnet sind, dass die mehreren Kabel über dem Kabelhaltebereich der im Wesentlichen eingeschlossenen Kabeltrasse gehalten werden.

17. Kabelhalteanordnung nach Anspruch 14, bei der der erste und der zweite Seitenarm (30, 34) der im Wesentlichen eingeschlossenen Kabeltrasse in Verwendung so angeordnet sind, dass die Kabel längs der im Wesentlichen eingeschlossenen Kabeltrasse führen.

18. Kabelhalteanordnung nach einem der Ansprüche 14 bis 17, bei der die zweite Kabelhalterung im Wesentlichen gerade ist.

19. Kabelhalteanordnung nach einem der Ansprüche 14 bis 18, mit mehreren zweiten Kabelhalterungen (40), wobei der erste Untersatz von Kabeln mehrere Gruppen von Kabeln aufweist;
Wobei jede zweite Kabelhalterung in Verwendung zwischen dem ersten und dem zweiten Seitenarm der im Wesentlichen eingeschlossenen Kabeltrasse angeordnet ist, um sich in Verwendung über dem zweiten Untersatz der mehreren Kabel zu erstrecken und in Verwendung eine Halterung für eine andere der Gruppen der Kabel des ersten Untersatzes von Kabeln zu liefern.

20. Kabelverteilungsgestell (10) mit einer der Kabelhalteanordnungen der Ansprüche 14 bis 19.

## Revendications

1. Procédé de support de câbles dans un agencement de support de câbles dans lequel l'agencement de support de câbles comprend un parcours de câbles sensiblement fermé, dans lequel le procédé est **caractérisé par** :
dans une pluralité de câbles (22) situés dans le parcours de câbles sensiblement fermé et supportés par un premier support (14b) de câbles, sans enlever la pluralité de câbles du parcours de câbles sensiblement fermé, l'ouverture d'un espace entre un premier sous-ensemble (22b) de la pluralité de câbles situé au-dessus de l'espace et un deuxième sous-ensemble (22a) de la pluralité de câbles situé au-dessous de l'espace, dans lequel le deuxième sous-ensemble de la pluralité de câbles situé au-dessous de l'espace est situé sur et supporté par le premier support de câbles après l'ouverture de l'espace ;
dans lequel le premier sous-ensemble de la pluralité de câbles situé au-dessus de l'espace est séparé par l'espace du deuxième sous-ensemble de la pluralité de câbles situé au-dessous de l'espace ; le procédé comprenant, sans enlever l'un quelconque de la pluralité de câbles du parcours de câbles sensiblement fermé :
l'introduction d'un deuxième support (40) de câbles dans l'espace et le positionnement du deuxième support de câbles entre le premier sous-ensemble et le deuxième sous-ensemble de la pluralité de câbles ;
le montage du deuxième support de câbles dans une position entre le premier sous-ensemble et le deuxième sous-ensemble de la pluralité de câbles sur une structure (30, 34) de support ; et
l'abaissement sur le deuxième support de câbles du premier sous-ensemble de la pluralité de câbles de telle sorte que le poids du premier sous-ensemble de la pluralité de câbles est transféré par l'intermédiaire du deuxième support de câbles à la structure de support.

2. Procédé selon la revendication 1 comprenant, suite à l'enlèvement d'un ou plusieurs des câbles du deuxième sous-ensemble en-dessous du deuxième support de câbles de façon à créer un espace dans lequel le deuxième support de câbles peut être abaissé, l'abaissement du deuxième support de câbles en même temps que les câbles supportés par le deuxième support de câbles.

3. Procédé selon l'une quelconque des revendications 1 ou 2, dans lequel le deuxième support (40) de câbles est monté sur une structure (30) de support ayant une géométrie ajustable, dans lequel la géométrie de la structure de support est ajustable pour monter ou abaisser le deuxième support de câbles en même temps que les câbles supportés par le deuxième support de câbles.

4. Procédé selon la revendication 3 comprenant l'ajustement de la géométrie de la structure de support pour abaisser le deuxième support de câbles en même temps que les câbles supportés par le deuxième support de câbles.

5. Procédé selon une quelconque revendication précédente, dans lequel les câbles du deuxième sous-ensemble (22a) peuvent être enlevés du deuxième sous-ensemble en tirant longitudinalement sur le câble ;
dans lequel l'enlèvement d'un câble du deuxième sous-ensemble est soumis à surmonter un frottement entre le câble à enlever et au moins un autre câble du deuxième sous-ensemble ;
dans lequel le frottement entre le câble du deuxième sous-ensemble à enlever et l'au moins un autre câble du deuxième sous-ensemble est augmenté par le poids de câbles partiellement ou totalement supportés par le câble à enlever ; dans lequel le transfert du poids du premier sous-ensemble (22b) de la pluralité de câbles par l'intermédiaire du deuxième support de câbles à la structure de support réduit le poids de câbles partiellement ou totalement supportés par le câble à enlever, de manière à faciliter l'enlèvement du câble à enlever.

6. Procédé selon une quelconque revendication précédente, dans lequel le premier support (14b) de câbles fait partie d'un parcours de câbles comprenant des premier et deuxième bras latéraux (30, 34) ; dans lequel les premier et deuxième bras latéraux sont situés adjacents à l'une ou l'autre extrémité du premier support de câbles pour se projeter au-dessus du premier support de câbles.

7. Procédé selon une quelconque revendication précédente, dans lequel le premier support (14b) de câbles fait partie d'un parcours de câbles comprenant des premier et deuxième bras latéraux (30, 34) ; dans lequel les premier et deuxième bras latéraux sont agencés de façon à retenir les câbles sur le premier support de câbles.

8. Procédé selon une quelconque revendication précédente, dans lequel le premier support (14b) de câbles fait partie d'un parcours de câbles comprenant des premier et deuxième bras latéraux (30, 34) ; dans lequel les premier et deuxième bras latéraux sont agencés pour guider les câbles le long du parcours de câbles.

9. Procédé selon l'une quelconque des revendications 6, 7 et 8 ;
comprenant le montage du deuxième support de câbles dans le parcours de câbles dans une position entre les premier et deuxième bras latéraux.

10. Procédé selon une quelconque revendication précédente, dans lequel le parcours de câbles a une face supérieure ouverte permettant que des câbles soient ajoutés à la pluralité de câbles en abaissant les câbles par-dessus des câbles existants situés dans le parcours de câbles.

11. Procédé selon une quelconque revendication précédente comprenant en outre l'introduction d'un outil séparateur (420) de câbles entre des câbles de la pluralité de câbles supportés par le premier support (14b) de câbles ;
la manipulation de l'outil de manière à ouvrir l'espace entre le premier sous-ensemble de la pluralité de câbles situé au-dessus de l'outil et le deuxième sous-ensemble de la pluralité de câbles situé au-dessous de l'outil.

12. Procédé selon la revendication 11 comprenant en outre, suite au montage du deuxième support (40) de câbles, le déplacement de l'outil de manière à ce que le premier sous-ensemble de la pluralité de câbles soit abaissé sur le deuxième support de câbles et que le poids du premier sous-ensemble soit transféré à la structure de support.

13. Procédé selon une quelconque revendication précédente comprenant en outre l'introduction d'un autre support (40) de câbles dans un autre espace ouvert entre les câbles de la pluralité de câbles de manière à séparer les câbles pour former un autre sous-ensemble (22c) de la pluralité de câbles de manière à ce que l'autre support de câbles supporte les câbles de l'autre sous-ensemble et transfère le poids de l'autre sous-ensemble de câbles à la structure de support.

14. Agencement de support de câbles pour supporter une pluralité de câbles (22) dans un parcours de câbles sensiblement fermé, dans lequel la pluralité de câbles comprend un premier sous-ensemble (22b) et un deuxième sous-ensemble (22a) ;
dans lequel l'agencement de support de câbles comprend un parcours de câbles sensiblement fermé comprenant : des premier et deuxième bras latéraux (30, 34) du parcours de câbles sensiblement fermé agencés pour se projeter au-dessus d'une partie de base (14b) de support de câbles du parcours de câbles sensiblement fermé et dans lequel l'agencement de support de câbles comprend également : un deuxième support (40) de câbles agencé dans le parcours de câbles sensiblement fermé entre les premier et deuxième bras latéraux et agencé pour s'étendre, à l'utilisation, entre le premier sous-ensemble et le deuxième sous-ensemble de la pluralité de câbles et pour offrir, à l'utilisation, un support au premier sous-ensemble de câbles ;
dans lequel le premier sous-ensemble de la pluralité de câbles est situé, à l'utilisation, au-dessus du deuxième support de câbles et le deuxième sous-ensemble de la pluralité de câbles est situé, à l'utilisation, au-dessous du deuxième support de câbles ;
dans lequel le deuxième support de câbles est monté sur une structure de support de telle manière que le deuxième support de câbles transfère, à l'utilisation, le poids du premier sous-ensemble de câbles à la structure de support
**caractérisé en ce que** :
le deuxième support de câbles est agencé pour s'étendre, à l'utilisation, dans le parcours de câbles sensiblement fermé entre le premier sous-ensemble et un deuxième sous-ensemble de câbles dans une position qui serait occupée par le premier sous-ensemble de câbles, si le deuxième support de câbles devait être enlevé du parcours de câbles sensiblement fermé ;
de telle manière que, sans enlever un quelconque de la pluralité de câbles du parcours de câbles sensiblement fermé, le deuxième support de câbles peut être introduit, à l'utilisation, depuis l'extérieur du parcours de câbles sensiblement fermé dans un espace entre le premier sous-ensemble et le deuxième sous-ensemble de la pluralité de câbles.

15. Agencement de support de câbles selon la revendication 14 comprenant en outre :
une partie supérieure (14b) de recouvrement agencée pour s'étendre par-dessus la pluralité de câbles et pour empêcher une introduction de câbles dans le parcours de câbles par le dessus ;
dans lequel un des premier et deuxième bras latéraux (30, 34) offre un espace pour introduire depuis un côté des câbles dans le parcours de câbles entre le bras latéral et la partie supérieure de recouvrement.

16. Agencement de support de câbles selon la revendication 14 dans lequel les premier et deuxième bras latéraux (30, 34) du parcours de câbles sensiblement fermé sont agencés à l'utilisation pour retenir la pluralité de câbles par-dessus la partie de support de câbles du parcours de câbles sensiblement fermé.

17. Agencement de support de câbles selon la revendication 14 dans lequel les premier et deuxième bras latéraux (30, 34) du parcours de câbles sensiblement fermé sont agencés à l'utilisation pour guider les câbles le long du parcours de câbles sensiblement fermé.

18. Agencement de support de câbles selon l'une quelconque des revendications 14 à 17 dans lequel le deuxième support de câbles est sensiblement rectiligne.

19. Agencement de support de câbles selon l'une quelconque des revendications 14 et 18 comprenant une pluralité de deuxièmes supports (40) de câbles, dans lequel le premier sous-ensemble de câbles comprend une pluralité de groupes de câbles ;
dans lequel chaque deuxième support de câbles est agencé, à l'utilisation, entre les premier et deuxième bras latéraux du parcours de câbles sensiblement fermé pour s'étendre, à l'utilisation, au-dessus du deuxième sous-ensemble de la pluralité de câbles et pour offrir, à l'utilisation, un support à un différent des groupes de câbles du premier sous-ensemble de câbles.

20. Châssis (10) de distribution de câbles comprenant un de l'agencement de support de câbles selon l'une quelconque des revendications 14 à 19.
